# EUROPÄISCHE PATENTSCHRIFT

(11) **EP 3 721 310 B1**
(45) Veröffentlichungstag und Bekanntmachung des Hinweises auf die Patenterteilung: **09.02.2022**
(21) Anmeldenummer: 18822015.6
(22) Anmeldetag: 06.12.2018
(51) Int. Cl.: G05D 1/02

(54) **VERFAHREN ZUR STEUERUNG DES FAHRVERHALTENS EINES FÜHRENDEN FAHRZEUGS EINES FAHRZEUGVERBANDS**
METHOD FOR CONTROLLING THE DRIVING BEHAVIOR OF A LEADING VEHICLE OF A VEHICLE TRAIN
PROCÉDÉ DE COMMANDE DU COMPORTEMENT DE ROULEMENT D'UN VÉHICULE DE TÊTE D'UNE FORMATION DE VÉHICULES

(30) Priorität: 08.12.2017 DE 102017011346
(43) Veröffentlichungstag der Anmeldung: 14.10.2020
(73) Patentinhaber: KNORR-BREMSE Systeme für Nutzfahrzeuge GmbH, 80809 München (DE)
(72) Erfinder: HECKER, Falk, 71706 Markgröningen (DE); GÜCKER, Ulrich, 71701 Schwieberdingen (DE); MUSTAPHA, Adnan, 75433 Maulbronn (DE)
(86) Internationale Anmeldenummer: PCT/EP2018/083817
(87) Internationale Veröffentlichungsnummer: WO 2019/110738

(56) Entgegenhaltungen:
- EP-A2- 1 569 183
- US-A1- 2017 308 097

## Beschreibung

Die Erfindung betrifft ein Verfahren zur Steuerung oder Regelung des Fahrverhaltens eines führenden ersten Fahrzeugs eines lose gekoppelten oder lose zu koppelnden Fahrzeugverbands aus dem führenden ersten Kraftfahrzeug und wenigstens einem zweiten Kraftfahrzeug während einer Fahrt des Fahrzeugverbands gemäß dem Oberbegriff von Anspruch 1.

Ein solcher lose gekoppelter Fahrzeugverband umfasst mindestens ein erstes sowie ein letztes und evtl. mittlere Kraftfahrzeuge. Es ist bekannt, Kraftfahrzeuge elektronisch gekoppelt, abstands- und quergeregelt möglichst dicht hintereinander fahren zu lassen. Das jeweilige Folgekraftfahrzeug orientiert sich dabei optisch am vorausfahrenden Kraftfahrzeug. Alle Kraftfahrzeuge sind mit Sensoren zu Totwinkel- und Rückraumüberwachung und zur Fahrspurorientierung sowie mit Mitteln wenigstens zur Fahrzeug-zu-Fahrzeug-Kommunikation ausgestattet. Derartige lose gekoppelte Fahrzeugverbände oder Fahrzeugkolonnen von Kraftfahrzeugen werden in der Literatur im Allgemeinen als "Platoon" bezeichnet.

Auch können Kraftfahrzeuge über entsprechende Fahrerassistenzsysteme zur automatischen Abstandshaltung (auch als ACC-Systeme bekannt - Adaptive Cruise Control) nicht mechanisch, sondern elektronisch gekoppelt sein. Hierzu kann der aktuelle Abstand des vorausfahrenden Kraftfahrzeugs über einen Sensor in dem dahinterfahrenden Kraftfahrzeug bestimmt werden und der Abstand auf einen vorgegebenen Sollwert, z. B. 8 m, geregelt werden. Zur Abstandsmessung können beispielsweise Radarsensoren oder Lidarsensoren verwendet werden.

Bei enger Kolonnenfahrt während Fahrten ab ca. 80 km/h können die Luftwiderstände der Kolonnenfahrzeuge um bis zu 30% reduziert werden. Hierbei sind typischerweise Abstände im Bereich von 8 m bis 20 m zwischen dem vorausfahrenden und dem diesen nachfolgenden Kraftfahrzeug günstig, um eine signifikante Reduktion des Luftwiderstands zu erreichen. Je kleiner die Abstände zwischen den beteiligten Kraftfahrzeugen sind, desto kleiner werden die Luftwiderstände der einzelnen Kraftfahrzeuge. Zur signifikanten Reduzierung des Luftwiderstands werden aufgrund der geringen Abstände höhere Anforderungen an die Fahrerassistenzsysteme zu automatischen Abstandshaltung gestellt.

Beispielhafte Verfahren zur elektronischen Kopplung von Fahrzeugen über Fahrerassistenzsysteme sind in DE 10 2007 046 765 A1 oder EP 1 569 183 A2 beschrieben.

An die Steuerung und Regelung eines Fahrzeugverbands werden unter anderem die folgenden Anforderungen gestellt:
- Einhalten eines kurzen Längsabstands der beteiligten Fahrzeuge untereinander (z.B. 8m - 20m) mit einer definierten Toleranz.
- Automatische Querführung der Folgefahrzeuge möglichst exakt in der Spur des Führungsfahrzeugs.
- Sicherstellen der Stabilität des Fahrzeugverbands, d.h. insbesondere Vermeiden des "Ziehharmonika-Effekts" (Kettenstabilität - string stability), der nicht nur zu einem erhöhten Verbrauch führt, sondern auch die Gefahr von Auffahrunfällen signifikant erhöht. Die Kettenstabilität ist dabei für Längs- und Querführung einzuhalten.
- Kleine Änderungen in der Geschwindigkeit der vorausfahrenden Kraftfahrzeuge des Fahrzeugverbands dürfen nicht von den nachfolgenden Kraftfahrzeugen verstärkt ausgeführt werden.
- Für die Führung in Querrichtung darf es bei den nachfolgenden Kraftfahrzeugen nicht zu einem Schneiden von Kurven und damit zu einem Verlassen der Fahrspur kommen.
- Ausreichend schnelle Bremsreaktion der Folgefahrzeuge bei starkem Bremsen des Führungsfahrzeugs zur Vermeidung von Auffahrunfällen.

Durch unterschiedliche technische Ausrüstungen und Eigenschaften der an einem Fahrzeugverband beteiligten Fahrzeuge wie z.B. Motorleistung, Leistungsfähigkeit der Dauer- oder Betriebsbremse, Fahrzeugkonfiguration, Beladungszustand und Reifeneigenschaften der Einzelfahrzeuge ist die Einhaltung der obigen Anforderungen oft erschwert.

Ein gattungsgemäßes Verfahren ist aus EP 1 569 183 A2 bekannt. US 2017/308097 A1 offenbart ein Fahrzeugkonvoi-Verfahren zum Steuern eines Führungsfahrzeugs und mindestens eines Folgefahrzeugs, wobei das Konvoi-Verfahren umfasst: Kommunizieren zwischen einem zentralen Server und entweder dem Führungsfahrzeug oder dem mindestens einen Folgefahrzeug, Erfassen eines Abstands und einer Relativgeschwindigkeit zwischen dem Führungsfahrzeug und dem mindestens einen Folgefahrzeug, um unter Verwendung des erfassten Abstands und der Relativgeschwindigkeit einen Fahrzeugabstand zwischen dem Führungsfahrzeug und dem mindestens einen Folgefahrzeug einzuhalten.

Der vorliegenden Erfindung liegt die Aufgabe zugrunde, das Verfahren im Sinne einer höheren Sicherheit zu verbessern.

Diese Aufgabe durch die Merkmale von Anspruch 1 gelöst.

### Offenbarung der Erfindung

Die Erfindung geht aus von einem Verfahren zur Steuerung oder Regelung des Fahrverhaltens eines führenden ersten Fahrzeugs eines lose gekoppelten oder lose zu koppelnden Fahrzeugverbands aus dem führenden ersten Kraftfahrzeug und wenigstens einem zweiten Kraftfahrzeug während einer Fahrt des Fahrzeugverbands, wobei
a) das den Fahrzeugverband führende erste Kraftfahrzeug und das wenigstens eine zweite Kraftfahrzeug jeweils Teilnehmer des Fahrzeugverbands bilden, und wobei
b) bereits vor Beginn der Fahrt des Fahrzeugverbands von jedem Teilnehmer des Fahrzeugverbands ein in Bezug zu dem Beginn der Fahrt vorangehenden Zeitpunkt bestehendes Fahr- und Bremsverhalten des betreffenden Teilnehmers charakterisierende Teilnehmerdaten selbst ermittelt, und die Teilnehmerdaten von wenigstens einem von dem führenden ersten Kraftfahrzeug abweichenden Teilnehmer an das führende erste Kraftfahrzeug übermittelt werden.
   Gemäß der Erfindung werden
c) danach aber noch vor Beginn der (ersten) Fahrt durch das führende erste Kraftfahrzeug des Fahrzeugverbands interne Vorgaben oder durch die externe Infrastruktur externe Vorgaben für das Fahr- und Bremsverhalten des führenden ersten Fahrzeugs während der Fahrt abhängig von den Teilnehmerdaten eines jeden Teilnehmers des Fahrzeugverbands festgelegt, und dann
d) wird während der Fahrt des Fahrzeugverbands das Fahr- und Bremsverhalten des führenden ersten Fahrzeugs abhängig von den internen Vorgaben oder abhängig von den externen Vorgaben bestimmt.

Unter die beanspruchte Erfindung fallen nur Ausführungsbeispiele bei denen die Teilnehmerdaten an das führende erste Kraftfahrzeug übermittelt werden und die die Schritte c) und d) beinhalten.

Alle weiteren nachstehenden Ausführungsbeispiele wurden zwar ursprünglich eingereicht, fallen aber nicht unter den Schutzumfang der beanspruchten Erfindung sondern dienen nur zur Erläuterung bestimmter Aspekte der geänderten Ansprüche.

Unter einem lose zu koppelnden Fahrzeugverband soll ein Fahrzeugverband verstanden werden, bei welchem die Teilnehmer im Begriff sind, sich untereinander zu einem losen Fahrzeugverband zu koppeln, d.h. wenn die Entscheidung bereits gefallen ist, alle zuvor ausgewählten Teilnehmer in dem Fahrzeugverband tatsächlich zuzulassen.

Unter einem lose gekoppelten Fahrzeugverband soll ein Fahrzeugverband verstanden werden, bei welchem die Teilnehmer bereits untereinander elektronisch gekoppelt sind und daher die Entscheidung über eine Kopplung dieser Teilnehmer in dem Fahrzeugverband bereits gefallen ist.

Unter den das Fahr- und Bremsverhalten des betreffenden Teilnehmers charakterisierenden Teilnehmerdaten sollen alle Daten verstanden werden, welche das Fahr- und Bremsverhalten des betreffenden Teilnehmers des Fahrzeugverbands beeinflussen können wie beispielsweise die Antriebsleistung einer Antriebsmaschine, die maximal aufbringbare Beschleunigung, die maximal aufbringbare Abbremsung bzw. Verzögerung einer Betriebsbremseinrichtung, das Gewicht, die Beladung, das Schwerpunktniveau, das Bremsschlupfverhalten, das Antriebsschlupfverhalten des betreffenden Teilnehmers.

Mit ein in Bezug zu dem Beginn der Fahrt vorangehenden Zeitpunkt bestehendes Fahr- und Bremsverhalten des betreffenden Teilnehmers charakterisierenden Teilnehmerdaten sind Teilnehmerdaten gemeint, welche bei dem betreffenden Teilnehmer bereits vor dem Beginn der Fahrt des Teilnehmers vorhanden sind oder herrschen. Diese in Bezug zum Beginn der (ersten) Fahrt des Fahrzeugverbands "historischen" Teilnehmerdaten lassen nämlich Rückschlüsse auf das (künftige) Fahr- und Bremsverhalten des betreffenden Teilnehmers während der Fahrt des Fahrzeugverbands zu und sind daher für das Festlegen der internen oder externen Vorgaben relevant.

Stellt sich beispielsweise heraus, dass vor dem Beginn der Fahrt des Fahrzeugverbands eine reibungsbasierte Betriebsbremse eines Teilnehmers des Fahrzeugverbands einen hohen Verschleiß aufweist, so deutet dies auf eine geringe maximal aufbringbare Verzögerung des betreffenden Teilnehmers bei einer Bremsung hin. Diese Teilnehmerdaten des betreffenden Teilnehmers haben dann Konsequenzen im Hinblick auf die internen oder externen Vorgaben, welche durch das führende erste Fahrzeug oder durch die externe Infrastruktur im Hinblick auf die Steuerung oder Regelung des Fahr- und Bremsverhaltens des führenden ersten Fahrzeugs während der Fahrt des Fahrzeugverbands festgelegt werden. Beispielsweise kann dann im Rahmen der internen oder externen Vorgaben die Höchstgeschwindigkeit des führenden ersten Fahrzeugs während der Fahrt des Fahrzeugverbands begrenzt und oder der Abstand d zwischen den Teilnehmern des Fahrzeugverbands vergrößert werden.

Unter einem Gewinnen oder Ermitteln der Teilnehmerdaten durch den Teilnehmer selbst soll verstanden werden, dass der betreffende Teilnehmer selbst über eine entsprechende Sensorik und eventuell auch über eine eigene elektronische Auswerteeinrichtung verfügt, um wenigstens einen Teil der sein Fahr- und Bremsverhalten charakterisierenden Teilnehmerdaten selbst zu erfassen und eventuell auswerten und eventuell auch in einem bordfesten Speichermedium speichern zu können.

Unter einem Gewinnen oder Ermitteln der Teilnehmerdaten durch den Teilnehmer selbst soll aber auch verstanden werden, dass die Teilnehmerdaten oder ein Teil der Teilnehmerdaten aus einem bordfesten Speichermedium des betreffenden Teilnehmers von dem betreffenden Teilnehmer selbst ausgelesen werden, welche zuvor dort abgespeichert wurden. Vorstellbar in diesem Zusammenhang ist beispielsweise, dass wenigstens ein Teil der Teilnehmerdaten durch Werkstattpersonal einer Werkstatt in das Speichermedium eingelesen wurde, durch welche der betreffende Teilnehmer gewartet wurde.

Unter einer externen Infrastruktur soll dabei eine mobile oder stationäre Einheit oder Struktur verstanden werden, welche zum einen extern oder außerhalb des Fahrzeugverbands angeordnet und zum andern mit der Autorität ausgestattet ist, das Fahr- und Bremsverhalten des lose gekoppelten Fahrzeugverbands während der Fahrt abhängig von der externen Infrastruktur festgelegten externen Vorgaben zu bestimmen. Bei einer solchen externen Infrastruktur kann es sich insbesondere um eine staatliche, öffentliche oder kommunale Behörde handeln. Die Kommunikation zwischen einem Kraftfahrzeug und einer solchen Infrastruktur erfolgt durch eine sog. Fahrzeug-zu-X-Kommunikation.

Dabei können die das aktuelle oder ein zu wenigstens einem vergangenen Zeitpunkt bestehende Fahr- und Bremsverhalten des betreffenden Teilnehmers charakterisierenden Teilnehmerdaten beispielsweise mittels einer Fahrzeug-zu-X-Kommunikation durch die externe Infrastruktur von dem betreffenden Teilnehmer angefragt und dann von der externen Infrastruktur durch den betreffenden Teilnehmer erhalten und beispielsweise in einem Speichermedium der externen Infrastruktur gespeichert werden. Dies kann insbesondere bereits zu einem Zeitpunkt geschehen, zu welchem der betreffende Teilnehmer lediglich einen potentiellen künftigen Teilnehmer an irgendeinem in der Zukunft noch zu bildenden Fahrzeugverband darstellt. Durch die Speicherung den betreffenden Teilnehmer charakterisierenden Teilnehmerdaten sind diese jederzeit abrufbar, insbesondere durch ein (künftiges) führendes erstes Kraftfahrzeug eines beliebigen noch zu bildenden oder bereits gebildeten Fahrzeugverbands.

Unter dem Begriff "Vorgaben" im Hinblick auf das Fahr- und Bremsverhalten des führenden ersten Kraftfahrzeugs während der Fahrt des Fahrzeugverbands sollen jegliche Vorgaben verstanden werden, durch welche das Fahr- und Bremsverhalten des führenden ersten Kraftfahrzeugs automatisch beeinflusst, verändert oder begrenzt werden kann.

Beispielsweise kann eine Bremsvorgabe darin bestehen, dass das führende erste Kraftfahrzeugs mit einer maximalen abgebremst wird, welche maximal der kleinsten maximal aufbringbaren Verzögerung unter allen maximal aufbringbaren Verzögerungen aller Teilnehmer entspricht, um im Bremsfall, d.h. wenn das führende erste Kraftfahrzeug bremsen muss, ein zu enges Auffahren des dem diese kleinste maximale Verzögerung aufbringenden Teilnehmer nachfolgenden Teilnehmers auf diesen Teilnehmer zu verhindern.

Beispielsweise kann eine Beschleunigungsvorgabe darin bestehen, dass das führende erste Kraftfahrzeugs mit einer maximalen Beschleunigung beschleunigt wird, welche maximal der kleinsten maximal aufbringbaren Beschleunigung unter allen maximal aufbringbaren Beschleunigungen aller Teilnehmer entspricht, um im Beschleunigungsfall, d.h. wenn das führende erste Kraftfahrzeug beschleunigt, ein zu weites Auseinanderziehen des Fahrzeugverbands zu verhindern.

Weiterhin beispielsweise kann eine Geschwindigkeitsvorgabe bei einer Kurvenfahrt darin bestehen, dass die Fahrgeschwindigkeit des führenden ersten Kraftfahrzeugs auf eine maximale Fahrgeschwindigkeit begrenzt wird, welche einer Grenzgeschwindigkeit entspricht, bei welcher der am meisten zum Überrollen oder Kippen neigende Teilnehmer gerade noch nicht überrollt oder kippt.

Selbstverständlich kann es sich bei dem "schwächsten" Teilnehmer, welcher die "ungünstigsten" Teilnehmerdaten in Bezug auf das Fahr- und Bremsverhalten unter allen Teilnehmern des Fahrzeugverbands aufweist auch um das führende erste Kraftfahrzeug handeln.

Besonders bevorzugt erfolgt das Festlegen der internen und/oder der externen Vorgaben durch das führende erste Kraftfahrzeug bzw. durch die externe Infrastruktur nach der Bildung des Fahrzeugverbands aus allen Teilnehmern aber vor Beginn einer gemeinsamen Fahrt des Fahrzeugverbands. Alternativ könnte das Festlegen der internen und/oder der externen Vorgaben auch bereits vor dem Bilden des Fahrzeugverbands erfolgen, sofern alle Teilnehmer bereits bei dem führenden ersten Kraftfahrzeug bzw. bei der externen Struktur für eine Teilnahme am geplanten Fahrzeugverbands zwar angemeldet, aber unter Umständen noch nicht für die Teilnahme zugelassen sind.

Durch das erfindungsgemäße Verfahren wird folglich die Sicherheit und die Ökonomie eines Betriebs von aus lose gekoppelten oder zu koppelnden Kraftfahrzeugen gebildeten Fahrzeugverbänden erhöht, weil das Fahr- und Bremsverhalten des führenden ersten Kraftfahrzeugs an dem im Hinblick auf das Fahr- und Bremsverhalten "schwächsten" Teilnehmer des Fahrzeugverbands ausgerichtet wird.

Durch die in den Unteransprüchen aufgeführten Maßnahmen sind vorteilhafte Weiterbildungen und Verbesserungen des ersten Aspekts der Erfindung möglich.

Gemäß einer bevorzugten Ausführungsform des Verfahrens können wenigstens ein Teil der Teilnehmerdaten absolute Teilnehmerdaten und/oder wenigstens ein Teil der Teilnehmerdaten relative Teilnehmerdaten sein, welche abhängig von einer durch den Fahrzeugverband zu befahrenden und bereits vor Beginn der Fahrt bekannten Fahrbahn oder Fahrstrecke bestimmt werden.

Dabei können insbesondere die relativen Teilnehmerdaten abhängig von Fahrbetriebsbedingungen gebildet werden, welche entlang der zu befahrenden und bereits vor Beginn der Fahrt bekannten Fahrbahn oder Fahrstrecke herrschen.

Beispielsweise können die Fahrbetriebsbedingungen wenigstens Folgendes beinhalten: Einen Reibwert und/oder eine Steigung und/oder ein Gefälle und/oder eine Krümmung der befahrenen oder zu befahrenden Fahrbahn oder Fahrstrecke.

Die entlang der von dem Fahrzeugverband zu befahrenden Fahrbahn oder Fahrstrecke herrschenden Fahrbetriebsbedingungen können beispielsweise durch ein GPS an Bord des führenden ersten Fahrzeugs ermittelt werden oder auch von der externen Infrastruktur stammen, welche diese Fahrbetriebsbedingungen dann an das führenden erste Kraftfahrzeug beispielsweise per Fahrzeug-zu-X-Kommunikation übermittelt.

Wenn daher vor Beginn der Fahrt beispielsweise durch das GPS im führenden ersten Kraftfahrzeug eine große Steigung der von dem Fahrzeugverband zu befahrenden Fahrbahn oder Fahrstrecke ermittelt oder bekannt gegeben wird und wenn zugleich bei wenigstens einem Teilnehmer des Fahrzeugverbands die maximale Antriebsleistung der Antriebsmaschine relativ niedrig ist, so kann gemäß einer internen Vorgabe durch das führende erste Kraftfahrzeug beispielsweise dessen Fahrgeschwindigkeit beim Befahren der Steigung reduziert werden, um ein Auseinanderziehen des Fahrzeugverbands zu vermeiden. Relativ zu der Steigung der Fahrbahn ist hier daher die Antriebsleistung wenigstens eines Teilnehmers zu niedrig, um die Steigung mit einer gewissen Geschwindigkeit befahren zu können, weshalb die Teilnehmerdaten dieses wenigstens einen Teilnehmers relative Teilnehmerdaten sind, welche auf die zu befahrende Fahrstrecke oder Fahrbahn bezogen sind. Bei Fahrt in der Ebene könnte demgegenüber die Antriebsleistung des wenigstens einen Teilnehmers ausreichend sein, damit der Fahrzeugverband ohne Auseinanderziehen mit einer gewissen Mindestfahrgeschwindigkeit fahren kann.

Denkbar in Bezug auf relative Teilnehmerdaten ist beispielsweise auch, dass der Reibwert der Fahrbahn auf der von dem Fahrzeugverband zu befahrenden Fahrstrecke durch Regen, Schnee oder Eis relativ niedrig ist und deshalb Teilnehmer ohne eine Fahrdynamikregelung bzw. ohne funktionsfähige Fahrdynamikregelung schnell instabile Fahrzustände einnehmen können. Die Information über die stellenweise niedrigen Reibwert der Fahrbahn der von dem Fahrzeugverband zu befahrenden Fahrstrecke kann beispielsweise von der externen Infrastruktur stammen und von dieser wiederum an das führenden erste Kraftfahrzeug beispielsweise per Fahrzeug-zu-X-Kommunikation übermittelt werden. Als externe oder interne Vorgaben kann dann beispielsweise die Höchstgeschwindigkeit des führenden ersten Kraftfahrzeugs beim Befahren der rutschigen Passagen herabgesetzt werden.

Gemäß einem weiteren Beispiel für relative Teilnehmerdaten kann die externe Infrastruktur über eine Fahrzeug-zu-X-Kommunikation eine aktuell große Krümmung bzw. einen sehr kleinen Kurvenradius einer Kurve der von dem Fahrzeugverband zu befahrenden Fahrbahn oder Fahrstrecke an das führende erste Kraftfahrzeug übermitteln und zugleich bei wenigstens einem der Teilnehmer des Fahrzeugverbands eine relativ hohes Schwerpunktniveau vorliegen, so dass dann als beispielsweise externe Vorgabe, welche dann von der externen Infrastruktur an das führende erste Kraftfahrzeug beispielsweise mittels Fahrzeug-zu-X-Kommunikation übermittelt wird, die Geschwindigkeit des führenden ersten Kraftfahrzeugs beim Befahren der Kurve herabgesetzt werden, um ein Umkippen des den hohen Schwerpunkt aufweisenden Teilnehmers beim Befahren der Kurve zu vermeiden.

Alternativ oder zusätzlich können aber auch absolute Teilnehmerdaten fest vorgegeben werden, welche beispielsweise abhängig von vorgegebenen oder vorbestimmten Fahrbetriebsbedingungen gebildet werden. Beispielsweise können vorgegebene oder vorbestimmte Fahrbetriebsbedingungen durch Bereiche von Fahrbetriebsbedingungen definiert sein, in welchen üblicherweise ein Betrieb eines Kraftfahrzeugs stattfindet oder auch stattfinden soll, wenn dies die zu befahrende Fahrstrecke oder Fahrbahn befährt.

Gemäß einer Weiterbildung können die das aktuelle oder das zu wenigstens einem vergangenen Zeitpunkt bestehende Fahr- und Bremsverhalten des betreffenden Teilnehmers charakterisierenden Teilnehmerdaten wenigstens die folgenden Daten des betreffenden Teilnehmers beinhalten:
a) das Beschleunigungsverhalten des betreffenden Teilnehmers, insbesondere die Motorleistung, die Motormoment-Kennlinie, das gerade vorliegende Übersetzungsverhältnis des Antriebsstrangs, die maximal mögliche Beschleunigung und/oder die Antriebskräfte, und/oder
b) das Verzögerungsverhalten des betreffenden Teilnehmers, insbesondere die maximal mögliche Verzögerung, der Schlupf der Reifen, die Bremsenkennwerte, die Längs- und Quersteifigkeit der Reifen, und/oder
c) die Kippgrenze und/oder die Überrollgrenze des betreffenden Teilnehmers, insbesondere die Kurvengrenzgeschwindigkeit, die Beladung, die Beladungsverteilung und/oder die Schwerpunkshöhe, und/oder
d) Daten über das das Lenksystem des betreffenden Teilnehmers, insbesondere die Stellung von Rädern von lenkenden Achsen, den Lenkwinkel von Rädern von lenkenden Achsen und/oder das aufgewendete Lenkmoment,
e) die Höchstgeschwindigkeit des betreffenden Teilnehmers.

Besonders bevorzugt kann die Selbstermittlung der Teilnehmerdaten durch ein Kraftfahrzeug oder durch einen Teilnehmer mittels an oder in dem betreffenden Kraftfahrzeug/Teilnehmer angeordneter Sensoren und/oder elektronischer Auswerteeinrichtungen erfolgen.

Beispielsweise können Bremsbelagverschleißsensoren vorgesehen sein, welche dem momentanen Verschleiß von Bremsbelägen der Betriebsbremseinrichtung des betreffenden Teilnehmers entsprechende Signale erzeugen. Sollte daher beispielsweise bei einem Teilnehmer eine bordfeste Sensorik, insbesondere eine Bremsbelagverschleißsensorik feststellen, dass der Verschleiß der Bremsbeläge der Reibungsbremsanlage des Teilnehmers bereits fortgeschritten ist, so kann eine externe Vorgabe darin bestehen, dass die Höchstgeschwindigkeit des Fahrzeugverbands während der Fahrt gegenüber einer Höchstgeschwindigkeit beschränkt oder herabgesetzt wird, welche mit nicht oder wenig verschlissenen Bremsbelägen möglich wäre.

Im Zusammenhang mit einer druckmittelbetriebenen Betriebsbremseinrichtung könnte auch die Drucksignale wenigstens eines Drucksensors für eine Generierung von Teilnehmerdaten betreffend die Betriebsbremseinrichtung des Teilnehmers herangezogen werden, wenn durch diesen wenigstens einen Drucksensor beispielsweise im Laufe von in Bezug auf den Beginn der Fahrt des Fahrzeugverbands vorangehenden Bremsungen erzeugte Bremsdrücke erfasst und in einem Speichermedium gespeichert werden.

Denkbar sind generell jegliche Art von Sensoren denkbar, welche dazu geeignet sind, Leistungs- oder Zustandsdaten von wenigstens einer Baugruppe eines Teilnehmers zu erfassen, welche in Zusammenhang mit den Fahr- und Bremsverhalten des betreffenden Teilnehmers stehen.

Gemäß einer besonders zu bevorzugenden Weiterbildung können vor Beginn der Fahrt die Teilnehmerdaten in einem bordfesten Datenspeicher des betreffenden Teilnehmers gespeichert werden oder an einen externen Datenspeicher der Infrastruktur außerhalb des Teilnehmers mittels einer Fahrzeug-zu-X-Kommunikation gesendet und dort gespeichert werden. Folglich wird in dem jeweiligen Speicher dann eine Art "Historie" der Teilnehmerdaten und insbesondere von Verschleißdaten beispielsweise einer Betriebsbremseinrichtung des Teilnehmers aufgezeichnet. Aus dem Datenspeicher können dann die Teilnehmerdaten ausgelesen und an das führende erste Kraftfahrzeug mittels einer Fahrzeug-zu-Fahrzeug-Kommunikation ausgesendet werden, um dann die internen Vorgaben auf der Basis der Teilnehmerdaten festzulegen.

Auch kann auf der Basis der Teilnehmerdaten eines Teilnehmers eine Kategorisierung hinsichtlich eines erwarteten Fahr- und Bremsverhaltens des betreffenden Teilnehmers innerhalb des Fahrzeugverbands während der Fahrt vorgenommen werden.

Wie oben bereits angedeutet, kann vor Beginn der (ersten) Fahrt des Fahrzeugverbands eine direkte oder indirekte Fahrzeug-zu-Fahrzeug-Kommunikation zwischen jedem zweiten Kraftfahrzeug und dem führenden ersten Kraftfahrzeug und/oder eine direkte oder indirekte Fahrzeug-zu-X-Kommunikation zwischen dem führenden ersten Kraftfahrzeug und der externen Infrastruktur stattfinden oder durchgeführt werden.

Beispielsweise können vor dem Beginn der Fahrt das Fahr- und Bremsverhalten des führenden ersten Kraftfahrzeugs charakterisierende erste Teilnehmerdaten und/oder das Fahr- und Bremsverhalten des wenigstens einen zweiten Kraftfahrzeugs charakterisierende zweite Teilnehmerdaten durch das jeweilige Kraftfahrzeug selbst ermittelt werden.

Mittels der Fahrzeug-zu-Fahrzeug-Kommunikation können die durch das wenigstens eine zweite Kraftfahrzeug selbst ermittelten zweiten Teilnehmerdaten an das führende erste Kraftfahrzeug übermittelt werden.

Auch können mittels der Fahrzeug-zu-X-Kommunikation durch das führende erste Kraftfahrzeug selbst ermittelte erste Teilnehmerdaten und durch das wenigstens eine zweite Kraftfahrzeug selbst ermittelte zweite Teilnehmerdaten von dem führenden ersten Kraftfahrzeug an die externe Infrastruktur gesandt oder von der externen Infrastruktur angefordert werden.

Gemäß einer Weiterbildung können das führende erste Kraftfahrzeug mittels der Fahrzeug-zu-X-Kommunikation erste Teilnehmerdaten und/oder zweite Teilnehmerdaten von der externen Infrastruktur abfragen oder erhalten, welche die Infrastruktur zuvor von dem führenden ersten Kraftfahrzeug und/oder von dem wenigstens einen zweiten Teilnehmer oder Kraftfahrzeug mittels der Fahrzeug-zu-X-Kommunikation erhalten hat.

Auch kann die externe Infrastruktur auf der Basis der ersten Teilnehmerdaten und auf der Basis der zweiten Teilnehmerdaten die externen Vorgaben festlegen.

Alternativ oder zusätzlich kann das führende erste Kraftfahrzeug auf der Basis der ersten Teilnehmerdaten und auf der Basis der zweiten Teilnehmerdaten die internen Vorgaben festlegen.

Der grundlegende Erfindungsgedanke betrifft daher ein Verfahren zur Längs- bzw. Quersteuerung/-regelung eines Fahrzeugverbands, um den Abstand zwischen den einzelnen Teilnehmern zu steuern/regeln und möglichst stabil zu halten.

Das Fahr- und Bremsverhalten des lose gekoppelten Fahrzeugverbands und damit die die internen und/oder externen Vorgaben werden beispielsweise in Bezug auf die drei Fahr- und Bremssituationen
A) Bremsen mit geringer Verzögerung unter normaler stabiler Fahrt des führenden ersten Fahrzeugs (Verzögerung beispielsweise < 3m/s²),
B) Bremsen mit hoher Verzögerung des führenden ersten Fahrzeugs (Verzögerung beispielsweise > 3m/s²) inklusive fahrdynamisch stabilisierender Eingriffe durch ABS, ASR und/oder ESP bei wenigstens einem Teilnehmer,
C) Starkes Bremsen (Notbremsung) eingeleitet durch das führende erste Kraftfahrzeug inklusive fahrdynamisch stabilisierender Eingriffe durch ABS, ASR und/oder ESP bei wenigstens einem Teilnehmer,
jeweils unterschiedlich festgelegt.

### Normale stabile Fahrt

Bei der normalen stabilen Fahrt gemäß obigem Buchstaben A) fahren die Teilnehmer des Fahrzeugverbands in relativ geringem Abstand hintereinander her. Zur Aufrechterhaltung dieses Fahrzustandes sind nur leichte Anpassungsbremsungen und moderate Veränderungen der Fahrrichtung erforderlich. Alle dem führenden ersten Kraftfahrzeug folgenden Teilnehmer besitzen die erforderliche Motorleistung, um mit ihrer aktuellen Beladung auch bei Steigungen die vorgegebene Geschwindigkeit des führenden ersten Kraftfahrzeugs fahren zu können. Alle Teilnehmer besitzen beispielsweise auch Dauerbremsanlagen, um auch im Gefälle die Geschwindigkeit des führenden ersten Kraftfahrzeugs fahren zu können. Die Betriebsbremse (Reibungsbremse) sollte nur kurzzeitig eingesetzt werden, um eine Überhitzung und damit ein Bremsfading zu vermeiden. Der Reibwert der Straße ist ausreichend hoch, so dass keine Fahrerassistenzsysteme wie ABS und/oder ESP eingreifen müssen. Das führende erste Kraftfahrzeug sollte für die Wahl einer geeigneten Fahrgeschwindigkeit des Fahrzeugverbands die Leitungsfähigkeit und mögliche Grenzen der nachfolgenden weiteren Teilnehmer kennen.

Die Geschwindigkeit des Fahrzeugverbands wird beispielsweise nach oben hin einerseits durch die Motorleistung in Kombination der jeweiligen Beladung und andererseits aber auch durch die Kurvengrenzgeschwindigkeit aufgrund des Schwerpunktsniveaus des in dieser Hinsicht "schwächsten" Teilnehmers begrenzt. Bei zu geringer Motorleistung eines Teilnehmers würde der Abstand zwischen dem Teilnehmer und dem voraus fahrenden Teilnehmer zu stark vergrößern. Fährt andererseits das führende erste Kraftfahrzeug schneller als die zulässige Kurvengrenzgeschwindigkeit von einem der weiteren Teilnehmer, so wird beispielsweise eine an Bord des betreffenden Teilnehmers installierte Fahrdynamikregelung (ESP bzw. Roll Stability Programm) durch einen Bremseingriff den betreffenden Teilnehmer auf die für ihn geltende Kurvengrenzgeschwindigkeit herunterbremsen. Folglich würde der Fahrzeugverband sich an dem betreffenden Teilnehmer ebenfalls auseinanderziehen, zusätzlich könnte der ESP-Bremseingriff sehr hart stattfinden, so dass die folgenden Teilnehmer Probleme hätten, einen vorgegebenen Abstand zum betreffenden Teilnehmer einzuhalten.

Folglich wird beispielsweise die Geschwindigkeit des ersten führenden Fahrzeugs des Fahrzeugverbands abhängig von den Kipp- oder Überrolleigenschaften eines nachfolgenden Teilnehmers beispielsweise als interne Vorgabe festgelegt, welches in dieser Hinsicht den "schwächsten" Teilnehmer des Fahrzeugverbands darstellt. Die Kipp- oder Überrolleigenschaften der Teilnehmer sind wiederum von der Fahrzeugmasse, der Beladung, der Beladungsverteilung und von der Kurvengrenzgeschwindigkeiten abhängig.

Vorzugsweise die elektronischen Bremsensteuergeräte der vorzugsweise elektrischen oder elektro-pneumatischen Betriebsbremseinrichtungen der Teilnehmer des Fahrzeugverbands ermittelt je Teilnehmer hier beispielsweise die Kipp- und/oder Überrolleigenschaften des jeweiligen Teilnehmers und teilen diese dem "Manager" des Fahrzeugsverbands in Form des führenden ersten Kraftfahrzeugs und/oder auch in Form der externen Struktur mit, damit das führende ersten Kraftfahrzeug die internen Vorgaben und/oder die externe Struktur die externen Vorgaben festlegen oder vorgeben kann.

### Fahrt mit Stabilisierungseingriffen (ABS, ESP)

Bei einer solchen Fahrt gemäß obigem Buchstaben B) treten situationsbedingt Stabilisierungseingriffe durch Fahrdynamikregelsysteme (ABS, ESP) auf.

Das Fahr- und Bremsverhalten des lose gekoppelten Fahrzeugverbands und damit die die Steuer-/Regelstrategie während einer solchen Fahrt könnte dann darin bestehen, dass der Fahrzeugverband auseinandergezogen wird, um so den Abstand d zwischen den Teilnehmern zu erhöhen und damit das Risiko von Auffahrunfällen zu reduzieren. Gegenüber einem bei einer normalen stabilen Fahrt gemäß Ziffer A) wird daher im Fall B) der Abstand d zwischen zwei Teilnehmern vergrößert.

### Starkes Bremsen (Notbremsung) durch das führende erste Kraftfahrzeug

Bei einem solchen Fall gemäß obigem Buchstabe C) taucht vor dem führenden ersten Kraftfahrzeug plötzlich ein Hindernis auf, die entweder den Fahrer oder eine Autopiloteinrichtung dieses Kraftfahrzeugs zu einer Notbremsung eigentlich mit maximal möglicher Verzögerung zwingt.

Dann entsteht aber ein Dilemma. Es könnte nämlich eigentlich bei dem führenden ersten Kraftfahrzeug mit der dort maximal zur Verfügung stehenden Verzögerung gebremst werden, um das Kollisionsrisiko bzw. eine Kollisionsgeschwindigkeit mit dem Hindernis so gering wie möglich zu halten. Damit die nachfolgenden Teilnehmer nicht aufeinander auffahren, kann allerdings nur mit einer demgegenüber angenommen kleineren maximalen Verzögerung des am "schwächsten" bremsenden Teilnehmers gebremst werden. Dies führt dazu, dass das führende erste Kraftfahrzeug aufgrund der dann nach dem hinsichtlich Bremsen "schwächsten" Teilnehmer festgelegten internen Vorgaben mit einer geringeren, nämlich der relativ geringen maximalen Verzögerung des "schwächsten" Teilnehmers bremst. Infolgedessen steigt das Kollisionsrisiko bzw. die Kollisionsgeschwindigkeit mit dem Hindernis.

Dieses Dilemma kann gemäß der Erfindung vermieden werden, indem beispielsweise durch die festgelegten internen und/oder externen Vorgaben die Geschwindigkeit des führenden ersten Kraftfahrzeugs so eingestellt bzw. gesteuert/geregelt wird, dass selbst bei einer oben beschriebenen Notbremsung mit relativ geringer, nach dem "schwächsten" Teilnehmer ausgerichteten Verzögerung des führenden ersten Kraftfahrzeugs keine Kollision oder eine Kollision mit lediglich geringer Kollisionsgeschwindigkeit stattfindet.

Bevorzugt werden daher bereits vor Beginn der ersten Fahrt des Fahrzeugverbands die internen und/oder externen Vergaben festgelegt, was eine proaktive Steuerung/Regelung des Fahrverhaltens des führenden ersten Kraftfahrzeugs darstellt. Die internen und/oder externen Vorgaben werden daher bevorzugt bereits vor einer ersten gemeinsamen Fahrt des Fahrzeugsverbands festgelegt und dann während der ersten gemeinsamen Fahrt bzw. während nachfolgender Fahrten des

### Reaktion auf einen Ausfall von Komponenten

Während der Fahrt des Fahrzeugverbands kann es zu einem Ausfall oder Fehlern in Komponenten der Teilnehmer kommen, welche das Fahr- und Bremsverhalten beeinflussen. Die Längs- und Querführung des Fahrzeugverbands kann daher durch redundante Aktuatoren und Sensoren übernommen werden.

Ausgehend von der Leistungsfähigkeit der redundanten Aktuatoren und Sensoren kann eine Risikobewertung dahingehend erfolgen, wie lange mit der Redundanz weiter gefahren werden kann und wann durch Einleiten eines "Minimal Risk Manövers" der von dem Ausfalls oder Fehler betroffene Teilnehmer zur Herstellung eines sicheren Fahrzustands abgestellt werden muss.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Seitenansicht eines Fahrzeugverbands aus miteinander lose gekoppelten Kraftfahrzeugen;
- Fig.2: eine schematische Draufsicht des Fahrzeugverbands von Fig.1;
- Fig.3A: die schematische Seitenansicht des Fahrzeugverbands von Fig.1, bei welchem eine erste Ausführungsform eines erfindungsgemäßen Verfahrens angewendet wird;
- Fig.3B: die schematische Seitenansicht des Fahrzeugverbands von Fig.1, bei welchem eine zweite Ausführungsform des erfindungsgemäßen Verfahrens angewendet wird;
- Fig.3C: die schematische Seitenansicht des Fahrzeugverbands von Fig.1, bei welchem eine dritte Ausführungsform des erfindungsgemäßen Verfahre ns angewendet wird;
- Fig.4: Ein Ablaufdiagramm einer bevorzugten weiteren Ausführungsform des erfindungsgemäßen Verfahrens.

### Beschreibung der Ausführungsbeispiele

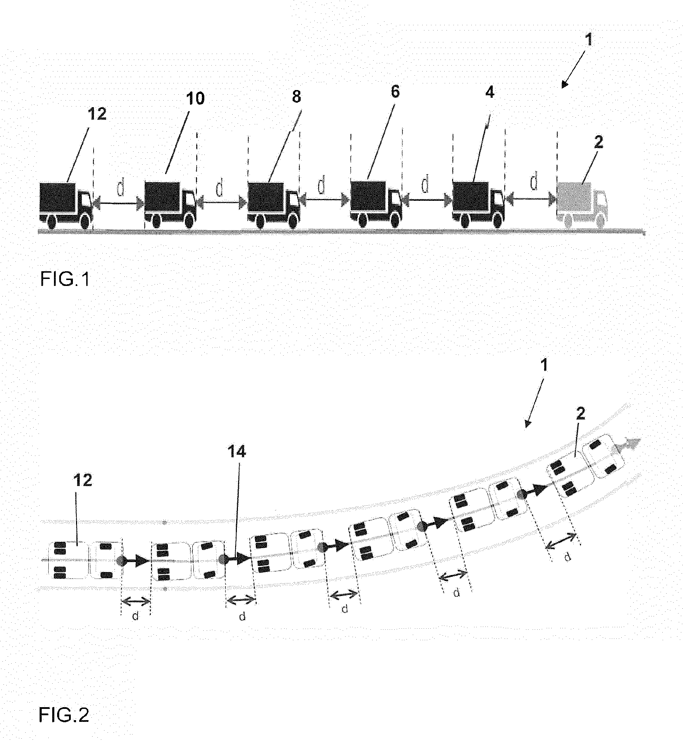

In Fig. 1 stellt eine schematische Seitenansicht eines Fahrzeugverbands 1 aus miteinander lose gekoppelten Fahrzeugen gemäß einer bevorzugte Ausführungsform dar. Der Fahrzeugverband 1 umfasst ein Führungsfahrzeug 2 als vorderstes Fahrzeug sowie weitere Kraftfahrzeuge, ein zweites Kraftfahrzeug 4, ein drittes Kraftfahrzeug 6, ein viertes Kraftfahrzeug 8, ein fünftes Kraftfahrzeug 12 wie auch ein sechstes letztes Kraftfahrzeug 12. Statt der dargestellten sechs Kraftfahrzeuge kann der Fahrzeugverband 1 auch mehr oder weniger Kraftfahrzeuge umfassen. Fig. 2 stellt die Draufsicht auf den Fahrzeugverband 1 dar, wie er entlang einer Linkskurve einer durch den Fahrzeugverband befahrenen Strecke fährt. Die sechs Kraftfahrzeuge 2 bis 12 stellen dann jeweils einen Teilnehmer des Fahrzeugverbands 1 dar. Es sei hier angenommen, dass die Bildung des Fahrzeugverbands 1, d.h. die Verständigung der Kraftfahrzeuge 2 bis 12 untereinander darüber, dass aus ihnen allen ein Fahrzeugverband 1 gebildet werden soll, abgeschlossen ist.

Im Ausführungsbeispiel handelt es sich bei den Kraftfahrzeugen 2 bis 12 um schwere Nutzfahrzeuge mit jeweils einer elektrisch steuerbaren und hier beispielsweise als Brennkraftmaschine ausgeführten Antriebsmaschine, einer elektrisch steuerbaren elektro-pneumatischen Betriebsbremseinrichtung, einer elektrisch steuerbaren elektro-pneumatischen Parkbremseinrichtung und einer elektrisch steuerbaren Lenkrichtung.

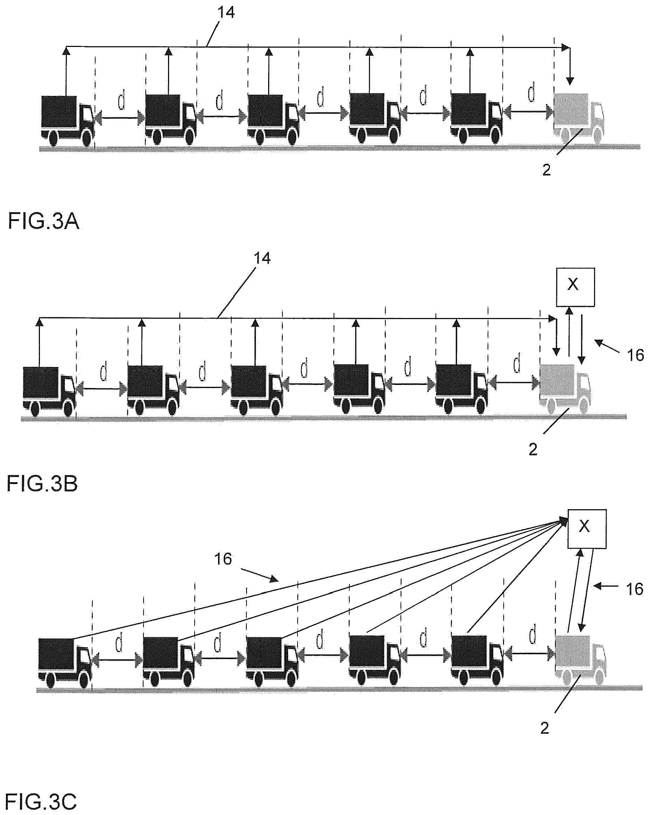

Die Kraftfahrzeuge oder Teilnehmer 2 bis 12 des Fahrzeugverbands 1 können Daten über bordfeste Fahrzeug-zu Fahrzeug-Kommunikationseinrichtung austauschen. Im vorliegenden Fall handelt es sich hierbei um drahtlose Fahrzeug-zu-Fahrzeug-Kommunikationseinrichtungen, bei welcher jedes der Kraftfahrzeuge 2 bis 12 jeweils mit einer Sendeeinrichtung sowie mit einer Empfangseinrichtung ausgestattet ist. Alternativ können die Fahrzeug-zu-Fahrzeug-Kommunikationseinrichtungen auch als Laser- oder Infrarotsende- und Empfangseinrichtung ausgeführt sein. In **Fig. 2** sowie in den **Fig. 3A** und **Fig. 3B** wird eine aufgrund der Fahrzeug-zu-Fahrzeug-Kommunikationseinrichtungen stattfindende Fahrzeug-zu-Fahrzeug-Kommunikation durch einen Pfeil 14 symbolisiert.

Zusätzlich kann auch eine drahtlose Fahrzeug-zu-Infrastruktur-Kommunikationseinrichtung vorgesehen sein, welche beispielsweise in jedem der Kraftfahrzeuge oder Teilnehmer 2 bis 12 installiert ist und ebenfalls eine Sendeeinrichtung sowie eine Empfangseinrichtung umfasst. Damit kann jedes der Kraftfahrzeuge 2 bis 12 und insbesondere das Führungsfahrzeug 2 mit einer externen, mobilen oder stationären Infrastruktur X kommunizieren. Eine aufgrund der Fahrzeug-zu-Fahrzeug-Kommunikationseinrichtung des Führungsfahrzeugs 2 mit der Infrastruktur X stattfindende Fahrzeug-zu-Fahrzeug-Kommunikation wird in **Fig. 3B** und **Fig. 3C** jeweils durch einen Pfeil 16 symbolisiert.

Jedes der sechs Kraftfahrzeuge 2 bis 12 ist mit einer bekannten Fahrzeug-Folgeregelungseinrichtung ausgestattet, welche einen Längsabstand der Kraftfahrzeuge 2 bis 12 auf einen bestimmten Wert d einregelt und es ermöglicht, dass die Kraftfahrzeuge 4 bis 12 dem Führungsfahrzeug 2 jeweils durch den Abstand d voneinander beabstandet folgen können. Hierzu sind entsprechende Sensoreinrichtungen in den Kraftfahrzeugen 2 bis 12 verbaut, welche beispielsweise Abstands- und Geschwindigkeitsdaten generieren, welche über die Fahrzeug-zu-Fahrzeug-Kommunikation 14 ausgetauscht werden. Außerdem ist jedes der Kraftfahrzeuge 2 bis 12 mit einem elektronischen Steuergerät ausgestattet, in welchem die Steuer-und Regelroutinen der Fahrzeugfolgeregelung implementiert sind.

Die Fahrzeug-Folgeregelungseinrichtung umfasst daher je Kraftfahrzeug 2 bis 12 eine Sendeeinrichtung und eine Empfangseinrichtung der Fahrzeug-zu-Fahrzeug-Kommunikationseinrichtung, eine Sensoreinrichtung, ein elektronisches Steuergerät sowie wenigstens eine elektrisch steuerbare Antriebsmaschine, eine elektrisch steuerbare Betriebsbremseinrichtung und eine elektrisch steuerbaren Lenkrichtung als Aktuatoren.

Aufgrund der Abstands- und Geschwindigkeitsdaten, welche jeweils von dem elektronischen Steuergerät der Fahrzeugfolgeregelung empfangen werden, findet dann im Rahmen der Fahrzeugfolgeregelung eine automatische elektrische Betätigung der elektrischen Lenkeinrichtungen, der elektro-pneumatischen Bremseinrichtungen sowie der elektrisch steuerbaren Antriebsmaschinen jedes am Fahrzeugverband 1 angegliederten Kraftfahrzeugs 2 bis 12 durch elektrische Stellsignale statt, um einer durch das Führungsfahrzeug 2 vorgegebenen Soll-Trajektorie, hier beispielsweise entlang einer Linkskurve gleich beabstandet zu folgen (siehe **Fig. 2**).

Beispielsweise jedes der sechs Kraftfahrzeug 2 bis 12 als Teilnehmer des Fahrzeugverbands 1 ist zudem mit einer Sensorik ausgestattet, welche sein Fahr- und Bremsverhalten charakterisierende Teilnehmerdaten erfasst und beispielsweise in einen beispielsweise bordfesten Datenspeicher einliest. Beispielsweise umfassen die Fahr- und Bremsverhalten charakterisierenden Teilnehmerdaten wenigstens die folgenden Daten:
a) das Beschleunigungsverhalten des betreffenden Kraftfahrzeugs oder Teilnehmers 2 bis 12, insbesondere die Motorleistung, die Motormoment-Kennlinie, das gerade vorliegende Übersetzungsverhältnis des Antriebsstrangs, die maximal mögliche Beschleunigung und/oder die Antriebskräfte, und/oder
b) das Verzögerungsverhalten des Kraftfahrzeugs oder Teilnehmers 2 bis 12, insbesondere die maximal mögliche Verzögerung, der Schlupf der Reifen, die Bremsenkennwerte, die Längs- und Quersteifigkeit der Reifen, und/oder
c) die Kippgrenze und/oder die Überrollgrenze des betreffenden Kraftfahrzeugs oder Teilnehmers 2 bis 12, insbesondere die Kurvengrenzgeschwindigkeit, die Beladung, die Beladungsverteilung und/oder die Schwerpunkshöhe, und/oder
d) Daten über das Lenksystem des betreffenden Kraftfahrzeugs oder Teilnehmers 2 bis 12, insbesondere die Stellung von Rädern von lenkenden Achsen, den Lenkwinkel von Rädern von lenkenden Achsen und/oder das aufgewendete Lenkmoment,
e) die Höchstgeschwindigkeit des betreffenden Teilnehmers oder Teilnehmers 2 bis 12.

Diese Teilnehmerdaten werden dann beispielsweise ständig oder in zeitlichen Abständen in den Datenspeicher des betreffenden Kraftfahrzeugs oder Teilnehmers 2 bis 12 eingelesen, wobei dann stets aktualisierte Werte vorliegen.

Im Rahmen der Erfindung wird ein Verfahren zur Steuerung oder Regelung des Fahrverhaltens des Führungsfahrzeugs 2 vorgestellt, bei welchem bereits vor Beginn der Fahrt des Fahrzeugverbands 1 von jedem Teilnehmer 2 bis 12 des Fahrzeugverbands 1 ein in Bezug zu dem Beginn der Fahrt vorangehenden Zeitpunkt bestehendes Fahr- und Bremsverhalten des betreffenden Teilnehmers 2, 4, 6, 8, 10, 12 charakterisierende Teilnehmerdaten selbst ermittelt werden, und die Teilnehmerdaten von wenigstens einem von dem Führungsfahrzeug 2 abweichenden Teilnehmer 4, 6, 8, 10, 12 an das Führungsfahrzeug 2 übermittelt werden, und/oder die Teilnehmerdaten von wenigstens einem Teilnehmer 4, 6, 8, 10, 12 an die in Bezug auf den Fahrzeugverband 1 externe Infrastruktur X übermittelt werden.

Während der (ersten und auch gegebenenfalls während wenigstens einer weiteren) Fahrt des Fahrzeugverbands wird dann das Fahr- und Bremsverhalten des führenden ersten Fahrzeugs abhängig von durch das Führungsfahrzeug des Fahrzeugverbands 1 vor der (ersten) Fahrt festgelegten internen Vorgaben und/oder abhängig von der externen Infrastruktur X vor der (ersten) Fahrt festgelegten externen Vorgaben bestimmt, wobei die internen Vorgaben und/oder die externen Vorgaben abhängig von den Teilnehmerdaten eines jeden Teilnehmers 4 bis 12 des Fahrzeugverbands 1 festgelegt werden.

Bei der Ausführungsform der Fig. 3A werden vor Beginn der ersten Fahrt des Fahrzeugverbands 1 beispielsweise die Teilnehmerdaten für jeden Teilnehmer, also für jedes der fünf dem Führungsfahrzeug 2 nachfolgenden Kraftfahrzeuge 4 bis 12 jeweils selbst ermittelt und mittels der Fahrzeug-zu-Fahrzeug-Kommunikation 14 auf das Führungsfahrzeug 2 entweder direkt oder indirekt, dann beispielsweise von dem sechsten Kraftfahrzeug 12 auf das vor diesem befindliche fünfte Kraftfahrzeug 10 und von diesem auf das wiederum davor befindliche vierte Kraftfahrzeug 8 usw. übertragen und beispielweise in dem elektronischen Betriebsbremssteuergerät der elektrisch steuerbaren Betriebsbremsenrichtung des Führungsfahrzeugs 2 gespeichert und erforderlichenfalls ausgewertet. Auch das Führungsfahrzeug 2 selbst ermittelt seine Teilnehmerdaten selbst und speichert diese beispielsweise in seinem elektronischen Bremssteuergerät. Vorzugsweise ebenfalls in dem elektronischen Betriebsbremssteuergerät des Führungsfahrzeugs 2 werden dann die internen Vorgaben festgelegt und dann die Steuerung/Regelung des Fahr- und Bremsverhaltens des Führungsfahrzeugs 2 während der Fahrt des Fahrzeugverbands 1 anhand dieser internen Vorgaben ausgeführt.

Diese internen Vorgaben werden daher bereits vor der ersten Fahrt des Fahrzeugverbands 1 abhängig von den Teilnehmerdaten eines jeden Kraftfahrzeugs oder Teilnehmers 2 bis 12 des Fahrzeugverbands 1 festgelegt, zu welchen auch das Führungsfahrzeug 2 selbst zählt.

Das Führungsfahrzeug 2 kennt daher durch die mittels der Fahrzeug-zu-Fahrzeug-Kommunikation 14 übermittelten Teilnehmerdaten von jedem der weiteren Kraftfahrzeuge oder Teilnehmer 4 bis 12 die Leitungsfähigkeit und mögliche Grenzen der weiteren Kraftfahrzeuge oder Teilnehmer 4 bis 12 im Hinblick auf das Fahr- und Bremsverhalten bereits vor der ersten Fahrt. Weiterhin sind dem Führungsfahrzeug 2 bereits vor der ersten Fahrt des Fahrzeugverbands 1 auch seine "eigenen" Teilnehmerdaten bekannt, weil sie an Bord des Führungsfahrzeugs 2 erfasst wurden.

Zum Festlegen der internen Vorgaben zählt dann beispielsweise eine geeignete Wahl einer Fahrgeschwindigkeit des Fahrzeugverbands 1 während der ersten Fahrt. Die Geschwindigkeit des Fahrzeugverbands 1 wird hier beispielsweise abhängig einerseits von der jeweiligen Motorleistung aller Teilnehmer 2 bis 12 als auch abhängig von der jeweiligen Beladung aller Teilnehmer 2 bis 12 und weiterhin beispielsweise abhängig vom Schwerpunktniveau des bezogen auf die genannten Parameter "schwächsten" Teilnehmers 2 bis 12 des Fahrzeugverbands 1 begrenzt. Bei zu geringer Motorleistung eines der Kraftfahrzeuge oder Teilnehmers 2 bis 12 beispielsweise würde sich der Abstand d zwischen diesem Teilnehmer und dem voraus fahrenden Teilnehmer insbesondere an einer Steigung zu stark vergrößern. Fährt andererseits das Führungsfahrzeug 2 schneller als die zulässige Kurvengrenzgeschwindigkeit von wenigstens einem der weiteren Kraftfahrzeuge oder Teilnehmer 4 bis 12, so wird beispielsweise eine an Bord des oder der betreffenden Teilnehmer(s) 4 bis 12 installierte Fahrdynamikregelung wie ESP (Elektronisches Stabilitäts-Programm) oder RSP (Roll Stability Program) durch einen Bremseingriff den betreffenden Teilnehmer 4 bis 12 auf die für ihn maßgebende Kurvengrenzgeschwindigkeit herunterbremsen. Folglich würde der Fahrzeugverband 1 sich an dem wenigstens einen von dem ESP-Bremseingriff betroffenen Kraftfahrzeug oder Teilnehmer 4 bis 12 ebenfalls auseinanderziehen, zusätzlich könnte der ESP- oder RSP-Bremseingriff auch sehr hart stattfinden, so dass die folgenden Kraftfahrzeuge oder Teilnehmer Probleme hätten, einen vorgegebenen Abstand zu dem vom ESP- oder RSP-Bremseingriff betroffenen Kraftfahrzeug oder Teilnehmer einzuhalten.

Folglich wird hier beispielsweise die Geschwindigkeit des Führungsfahrzeugs 2 des Fahrzeugverbands 1 während der Fahrt abhängig von den Kipp- oder Überrolleigenschaften aller Kraftfahrzeuge oder Teilnehmer 2 bis 12 beispielsweise als interne Vorgabe festgelegt, welcher in dieser Hinsicht den "schwächsten" Teilnehmer des Fahrzeugverbands 1 darstellt, d.h. welcher von allen Teilnehmern 2 bis 14 am ehesten zum Überrollen oder Kippen neigt. Die Kipp- oder Überrolleigenschaften der Teilnehmer 2 bis 14 sind wiederum unter anderem von der Fahrzeugmasse, der Beladung, der Beladungsverteilung und von der Kurvengrenzgeschwindigkeiten abhängig. Bei diesem "schwächsten" Teilnehmer kann es sich selbstverständlich auch um das Führungsfahrzeug 2 selbst handeln.

**Fig. 3B** stellt eine weitere Ausführungsform des erfindungsgemäßen Verfahrens vor. Dort werden zunächst wie bei der Ausführungsform des Verfahrens nach **Fig.3A** die Teilnehmerdaten der vom Führungsfahrzeug 2 abweichenden Teilnehmer 4 bis 12 mittels der Fahrzeug-zu-Fahrzeug-Kommunikation 14 vor Beginn der ersten Fahrt des Fahrzeugverbands 1 an das Führungsfahrzeug 2 übermittelt und dort beispielsweise in einem Speichermedium zwischengespeichert. Wie auch bei der Ausführung von **Fig.3A** erfasst das Führungsfahrzeug 2 seine "eigenen" Teilnehmerdaten und speichert diese vor der ersten Fahrt.

Vom Führungsfahrzeug 2 werden die Teilnehmerdaten aller Teilnehmer 2 bis 12, also auch die Teilnehmerdaten des Führungsfahrzeugs 2, dann über die Fahrzeug-zu-X-Kommunikation 16 an die externe Infrastruktur X übertragen, welche auf der Basis oder abhängig von den Teilnehmerdaten aller Teilnehmer 2 bis 12 des Fahrzeugverbands 1 dann vor der Fahrt externe Vorgaben festlegt und diese externen Vorgaben dann mittels der Fahrzeug-zu-X-Kommunikation 16 an das Führungsfahrzeug 2 übermittelt, welches die externen Vorgaben dann beispielsweise wiederum in Form einer Geschwindigkeitsgrenze während der Fahrt des Fahrzeugverbands 1 entlang der Linkskurve von **Fig. 2** umsetzt.

Bei der Ausführungsform des Verfahrens von **Fig. 3C** sei angenommen, dass alle Teilnehmer 2 bis 12 des Fahrzeugverbands 1 bereits für die Teilnahme am Fahrzeugverband 1 zugelassen und der externen Infrastruktur X als Teilnehmer des Fahrzeugverbands 1 bekannt sind. Dabei können die Teilnehmerdaten aller Teilnehmer 2 bis 14 beispielsweise als "historische" Teilnehmerdaten bereits in einem Speichermedium der externen Struktur X gespeichert sein.

Als für das Bremsverhalten des jeweiligen Teilnehmers 2 bis 12 relevanter Parameter wird hier beispielsweise von jedem der Kraftfahrzeuge oder Teilnehmer 2 bis 12 die jeweils maximal aufbringbare Verzögerung herangezogen. Die Teilnehmerdaten werden hier beispielsweise bereits zeitlich vor der Zulassung/Bildung des Fahrzeugverbands 1 und vor allem vor Beginn der ersten Fahrt des Fahrzeugverbands 1 über die Fahrzeug-zu-X-Kommunikation 16 an die externe Infrastruktur X übermittelt. Eine solche Übermittlung von Teilnehmerdaten von (künftigen) Teilnehmern 2 bis 12 eines Fahrzeugverbands 1 an die externe Infrastruktur X kann beispielsweise in festgelegten zeitlichen Abständen über die Fahrzeug-zu-X-Kommunikation 16 erfolgen, so dass in dem Speichermedium der externen Infrastruktur Teilnehmerdaten einer Vielzahl von potentiellen Teilnehmern an einem Fahrzeugverband 1 vorliegen und aus dem Speichermedium abgerufen und ausgewertet werden können.

Dann übermittelt die externe Infrastruktur X bevorzugt vor dem Beginn der ersten gemeinsamen Fahrt des Fahrzeugsverbands 1 die Teilnehmerdaten aller Teilnehmer 2 bis 12 des Fahrzeugverbands 1, hier insbesondere das maximale Verzögerungsvermögen eines jeden Teilnehmers 2 bis 12, also auch das des Führungsfahrzeugs 2 an das Führungsfahrzeug 2. Das Führungsfahrzeug 2 legt dann auf der Basis der übermittelten Teilnehmerdaten aller Teilnehmer 2 bis 12 die internen Vorgaben beispielsweise im Hinblick auf die Höchstgeschwindigkeit des Führungsfahrzeugs 2 für die erste gemeinsame Fahrt des Fahrzeugverbands 1 fest. Diese Höchstgeschwindigkeit des Führungsfahrzeugs 2 leitet sich dann beispielsweise aus dem maximalen Verzögerungsvermögen des Teilnehmers aller Teilnehmer 2 bis 12 ab, welcher diesbezüglich den schlechtesten oder ungünstigsten Wert liefert.

Alternativ kann natürlich auch die externe Infrastruktur X selbst auf der Basis der übermittelten Teilnehmerdaten aller Teilnehmer 2 bis 12 dann externe Vorgaben beispielsweise im Hinblick auf die Geschwindigkeit des Führungsfahrzeugs 2 im Rahmen der ersten gemeinsamen Fahrt des Fahrzeugverbands 1 festlegen.

Besonders bevorzugt erfolgt das Festlegen der internen und/oder der externen Vorgaben durch das Führungsfahrzeug 2 bzw. durch die externe Infrastruktur X daher nach der Bildung des Fahrzeugverbands 1 aus allen Teilnehmern 2 bis 12 aber noch vor Beginn der ersten gemeinsamen Fahrt des Fahrzeugverbands 1, also proaktiv. Die internen und/oder externen Vorgaben werden daher bevorzugt vor der ersten gemeinsamen Fahrt des Fahrzeugsverbands 1 festgelegt und dann während der gemeinsamen Fahrt des Fahrzeugverbands 1 umgesetzt bzw. angewandt.

Auch sind beliebige Kombinationen der in **Fig. 3A, Fig. 3B** und **Fig. 3C** symbolisierten und oben erläuterten Ausführungsformen des Verfahrens im Rahmen der Erfindung möglich. So können beispielsweise die Teilnehmerdaten lediglich von einem oder mehreren Kraftfahrzeugen aber nicht von allen Kraftfahrzeugen des Fahrzeugverbands gemäß **Fig. 3A** oder gemäß **Fig. 3B** durch die Fahrzeug-zu-Fahrzeug-Kommunikation 14 auf das Führungsfahrzeug 2 übertragen werden, hier beispielsweise die Teilnehmerdaten des sechsten und fünften Kraftfahrzeugs 10 und 12 und die Teilnehmerdaten des verbliebenen Kraftfahrzeugs oder der verbliebenen Kraftfahrzeuge des Fahrzeugverbands, hier beispielsweise die Teilnehmerdaten des ersten, zweiten und dritten Kraftfahrzeugs 2, 4, 6 von diesen direkt mittels der Fahrzeug-zu-X-Kommunikation 16 an die externe Struktur X und von dort zu dem Führungsfahrzeug 2 kommuniziert werden, wobei das Führungsfahrzeug 2 alleine dann anhand aller ihm dann zur Verfügung stehenden Teilnehmerdaten die internen Vergaben festlegt. Alternativ könnte auch die externe Infrastruktur bereits externe Vorgaben auf der Basis der direkt erhaltenen Teilnehmerdaten des sechsten und fünften Kraftfahrzeugs 10 und 12 festlegen und das Führungsfahrzeug zusätzlich interne Vorgaben auf der Basis der Teilnehmerdaten des ersten, zweiten und dritten Kraftfahrzeugs 2, 4, 6, wobei das erste Kraftfahrzeug das Führungsfahrzeug selbst ist.

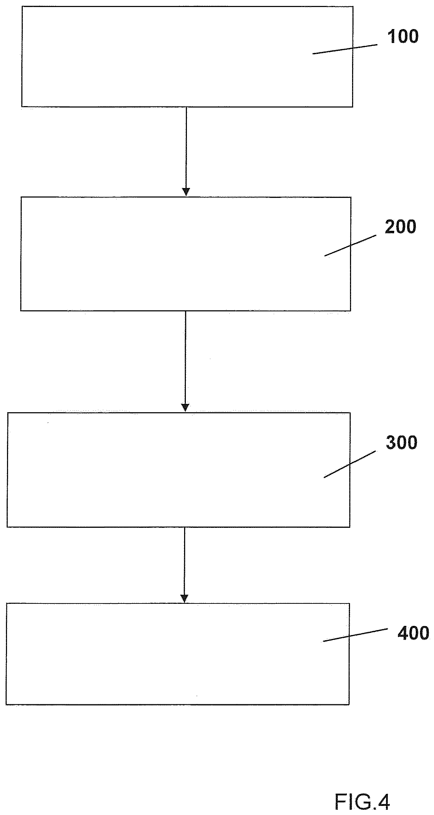

Zusätzlich kann das Verfahren gemäß der Erfindung auch reaktiv ausgebildet sein. Ein Ablaufschema dieser Ausführungsform des Verfahrens ist in **Fig.4** dargestellt.

In einem Schritt 100 wird die Leistungsfähigkeit des oder der "schwächsten" Teilnehmer(s) im Fahrzeugverband 1 ermittelt, wobei beispielsweise jeweils der kleinste Wert der maximal erreichbaren Verzögerung und/oder der kleinste Wert maximal erreichbaren Beschleunigung aus den Teilnehmerdaten aller Teilnehmer 2 bis 12 ermittelt wird.

In einem Schritt 200 wird dann die Verzögerung des Führungsfahrzeugs 2 auf ein gesetzlich zugelassenes Limit begrenzt, beispielsweise auf maximal 5m/s².

In einem Schritt 300 wird ausgehend vom letzten Kraftfahrzeug oder Teilnehmer 12 bis zum Führungsfahrzeug 2 in der Reihe des Fahrzeugverbands 1 geprüft, welche tatsächliche Verzögerung durch jedes Kraftfahrzeug 2 bis 12 oder durch jeden Teilnehmer bei einer Bremsung erreicht wird. Sodann wird die Verzögerung des Führungsfahrzeugs 2 entsprechend gepasst.

In einem Schritt 400 wird die Verzögerung initial angepasst, ggf. durch Anpassung des Abstands d. Je größer beispielsweise der aktuelle Abstand d im Moment der Bremsung ist, desto mehr Verzögerungsdifferenz zwischen den Teilnehmern kann toleriert werden.

Diese Parameter werden für folgende Zwecke verwendet:
- Anpassung des Brems- und Beschleunigungsverhalten der Teilnehmer, um den Abstand d zu dem jeweils vorausfahrenden Kraftfahrzeug konstant zu halten
- Bestimmung des zu regelnden Abstands d zu dem jeweils vorausfahrenden Kraftfahrzeug oder Teilnehmer.

Gemäß einer weiteren Ausführungsform können die internen Vorgaben und/oder die externen Vorgaben lediglich als Startwerte zu Beginn der Fahrt des Fahrzeugverbands 1 herangezogen werden, weil diese internen und/oder externen Vorgaben wegen ihres Basierens auf von der Kraftfahrzeugen zuvor selbst ermittelten oder gewonnenen ersten Teilnehmerdaten eine relativ geringe Verlässlichkeit aufweisen können.

Sodann können während der Fahrt den ersten Teilnehmerdaten entsprechende zweite Teilnehmerdaten ermittelt und mit den ersten Teilnehmerdaten, auf deren Basis vor Beginn der Fahrt die internen und/oder externen Vorgaben festgelegt wurden, verglichen werden, um die ersten Teilnehmerdaten durch die zweiten Teilnehmerdaten zu plausibilisieren.

### BEZUGSZEICHENLISTE

- 1: Fahrzeugverband
- 2: Führungsfahrzeug, ersts Fahrzeug
- 4: zweites Kraftfahrzeug
- 6: drittes Kraftfahrzeug
- 8: viertes Kraftfahrzeug
- 10: fünftes Kraftfahrzeug
- 12: sechstes Kraftfahrzeug
- 14: Fahrzeug-zu-Fahrzeug-Kommunikation
- 16: Fahrzeug-zu-X-Kommunikation
- X: externe Infrastruktur

## Patentansprüche

1. Verfahren zur Steuerung oder Regelung des Fahr- und Bremsverhaltens eines führenden ersten Fahrzeugs (2) eines lose gekoppelten oder lose zu koppelnden Fahrzeugverbands (1) aus dem führenden ersten Kraftfahrzeug (2) und wenigstens einem zweiten Kraftfahrzeug (4, 6, 8, 10, 12) während einer Fahrt des Fahrzeugverbands (1), wobei
a) das den Fahrzeugverband (1) führende erste Kraftfahrzeug (2) und das wenigstens eine zweite Kraftfahrzeug (4, 6, 8, 10, 12) jeweils Teilnehmer des Fahrzeugverbands (1) bilden, wobei
b) bereits vor Beginn der Fahrt des Fahrzeugverbands (1) von jedem Teilnehmer (2, 4, 6, 8, 10, 12) des Fahrzeugverbands (1) ein in Bezug zu dem Beginn der Fahrt vorangehenden Zeitpunkt bestehendes Fahr- und Bremsverhalten des betreffenden Teilnehmers (2, 4, 6, 8, 10, 12) charakterisierende Teilnehmerdaten selbst ermittelt werden und die Teilnehmerdaten von wenigstens einem von dem führenden ersten Kraftfahrzeug (2) abweichenden Teilnehmer (4, 6, 8, 10, 12) an das führende erste Kraftfahrzeug (2) übermittelt werden, **dadurch gekennzeichnet, dass**
c) danach aber noch vor Beginn der Fahrt durch das führende erste Kraftfahrzeug (2) des Fahrzeugverbands (1) interne Vorgaben für das Fahr- und Bremsverhalten des führenden ersten Fahrzeugs (2) während der Fahrt abhängig von den Teilnehmerdaten eines jeden Teilnehmers (4, 6, 8, 10, 12) des Fahrzeugverbands (1) festgelegt werden, und wobei dann
d) während der Fahrt des Fahrzeugverbands (1) das Fahr- und Bremsverhalten des führenden ersten Fahrzeugs (2) abhängig von den internen Vorgaben bestimmt wird.

2. Verfahren nach Anspruch 1, **dadurch gekennzeichnet, dass** wenigstens ein Teil der Teilnehmerdaten absolute Teilnehmerdaten und/oder wenigstens ein Teil der Teilnehmerdaten relative Teilnehmerdaten sind, welche abhängig von einer durch den Fahrzeugverband (1) zu befahrenden und bereits vor Beginn der Fahrt bekannten Fahrbahn oder Fahrstrecke bestimmt werden.

3. Verfahren nach Anspruch 2, **dadurch gekennzeichnet, dass** die relativen Teilnehmerdaten abhängig von Fahrbetriebsbedingungen gebildet werden, welche entlang der zu befahrenden und bereits vor Beginn der Fahrt bekannten Fahrbahn oder Fahrstrecke herrschen.

4. Verfahren nach Anspruch 3, **dadurch gekennzeichnet, dass** die Fahrbetriebsbedingungen wenigstens Folgendes beinhalten: Einen Reibwert und/oder eine Steigung und/oder ein Gefälle und/oder eine Krümmung der befahrenen oder zu befahrenden Fahrbahn oder Fahrstrecke.

5. Verfahren nach einem Ansprüche 2 bis 4, **dadurch gekennzeichnet, dass** die absoluten Teilnehmerdaten fest vorgegeben werden.

6. Verfahren nach Anspruch 5, **dadurch gekennzeichnet, dass** die absoluten Teilnehmerdaten bezogen auf vorgegebene oder vorbestimmte Fahrbetriebsbedingungen gebildet werden.

7. Verfahren nach einem der vorhergehenden Ansprüche, **dadurch gekennzeichnet, dass** die das Fahr- und Bremsverhalten des betreffenden Teilnehmers (4, 6, 8, 10, 12) charakterisierenden Teilnehmerdaten wenigstens die folgenden Daten des betreffenden Teilnehmers (4, 6, 8, 10, 12) beinhalten:
a) das Beschleunigungsverhalten des betreffenden Teilnehmers (4, 6, 8, 10, 12), insbesondere die Motorleistung, die Motormoment-Kennlinie, das gerade vorliegende Übersetzungsverhältnis des Antriebsstrangs, die maximal mögliche Beschleunigung und/oder die Antriebskräfte, und/oder
b) das Verzögerungsverhalten des betreffenden Teilnehmers (4, 6, 8, 10, 12), insbesondere die maximal mögliche Verzögerung des Fahrzeugs, der Schlupf der Reifen, die Bremsenkennwerte, die Längs- und Quersteifigkeit der Reifen, und/oder
c) die Kippgrenze und/oder die Überrollgrenze des betreffenden Teilnehmers (4, 6, 8, 10, 12), insbesondere die Kurvengrenzgeschwindigkeit, die Beladung, die Beladungsverteilung und/oder die Schwerpunkthöhe, und/oder
d) Daten über das Lenksystem des betreffenden Teilnehmers (4, 6, 8, 10, 12), insbesondere die Stellung von Rädern von lenkenden Achsen, den Lenkwinkel von Rädern von lenkenden Achsen und/oder das aufgewendete Lenkmoment,
e) die Höchstgeschwindigkeit des betreffenden Teilnehmers (4, 6, 8, 10, 12).

8. Verfahren nach einem der vorhergehenden Ansprüche, **dadurch gekennzeichnet, dass** die Selbstermittlung der Teilnehmerdaten durch einen Teilnehmer (2, 4, 6, 8, 10, 12) mittels an oder in dem betreffenden Teilnehmer (2, 4, 6, 8, 10, 12) angeordneter Sensoren und/oder elektronischer Auswerteeinrichtungen erfolgt.

9. Verfahren nach einem der vorhergehenden Ansprüche, **dadurch gekennzeichnet, dass** vor Beginn der Fahrt des Fahrzeugverbands (1) eine direkte oder indirekte Fahrzeug-zu-Fahrzeug-Kommunikation (14) zwischen dem wenigstens einen zweiten Kraftfahrzeug (4, 6, 8, 10, 12) und dem führenden ersten Kraftfahrzeug (2) und/oder eine direkte oder indirekte Fahrzeug-zu-X-Kommunikation (16) zwischen dem führenden ersten Kraftfahrzeug (2) und einer externen Infrastruktur (X) durchgeführt wird.

10. Verfahren nach Anspruch 9, **dadurch gekennzeichnet, dass** das Fahr- und Bremsverhalten des führenden ersten Kraftfahrzeugs (2) charakterisierende erste Teilnehmerdaten und/oder das Fahr- und Bremsverhalten des wenigstens einen zweiten Kraftfahrzeugs (4a, 4b, 4c, 6, 8) charakterisierende zweite Teilnehmerdaten durch das jeweilige Kraftfahrzeug (2, 4, 6, 8, 10, 12) selbst ermittelt werden.

11. Verfahren nach Anspruch 10, **dadurch gekennzeichnet, dass** mittels der Fahrzeug-zu-Fahrzeug-Kommunikation (14) die durch das wenigstens eine zweite Kraftfahrzeug (4, 6, 8, 10, 12) selbst ermittelten zweiten Teilnehmerdaten an das führende erste Kraftfahrzeug (2) übermittelt werden.

12. Verfahren nach Anspruch 11, **dadurch gekennzeichnet, dass** mittels der Fahrzeug-zu-X-Kommunikation (16) durch das führende erste Kraftfahrzeug (2) selbst ermittelte erste Teilnehmerdaten und durch das wenigstens eine zweite Kraftfahrzeug (4, 6, 8, 10, 12) selbst ermittelte zweite Teilnehmerdaten von dem führenden ersten Kraftfahrzeug (2) an die externe Infrastruktur (X) gesandt oder von der externen Infrastruktur (X) angefordert werden.

13. Verfahren nach Anspruch 10, **dadurch gekennzeichnet, dass** das führende erste Kraftfahrzeug (2) mittels der Fahrzeug-zu-X-Kommunikation (16) erste Teilnehmerdaten und/oder zweite Teilnehmerdaten von der externen Infrastruktur (X) abfragt oder erhält, welche die Infrastruktur (X) zuvor von dem führenden ersten Kraftfahrzeug (2) und/oder von dem wenigstens einen zweiten Teilnehmer (4, 6, 8, 10, 12) mittels der Fahrzeug-zu-X-Kommunikation (16) erhalten hat.

14. Verfahren nach Anspruch 12, **dadurch gekennzeichnet, dass** die externe Infrastruktur (X) auf der Basis der ersten Teilnehmerdaten und auf der Basis der zweiten Teilnehmerdaten die externen Vorgaben festlegt.

15. Verfahren nach Anspruch 11 oder 13, **dadurch gekennzeichnet, dass** das führende erste Kraftfahrzeug (2) auf der Basis der ersten Teilnehmerdaten und auf der Basis der zweiten Teilnehmerdaten die internen Vorgaben festlegt.

## Claims

1. A method for open- or closed-loop controlling the driving and braking behaviour of a leading first vehicle (2) of a vehicle train (1) that is or is to be loosely coupled comprising the leading first vehicle (2) and at least one second vehicle (4, 6, 8, 10, 12) while the vehicle train (1) is making a journey,
a) the first vehicle (2) leading the vehicle train (1) and the at least one second vehicle (4, 6, 8, 10, 12) each being participants in the vehicle train (1),
b) before the start of the journey of the vehicle train (1) participant data characterising a driving and braking behaviour of the participant (4, 6, 8, 10, 12) in question existing in relation to a point in time prior to the start of travel being determined by each participant (4, 6, 8, 10, 12) in the vehicle train (1) itself, and the participant data of at least one participant (4, 6, 8, 10, 12) different from the leading first vehicle (2) being transmitted to the leading first vehicle (2), **characterised in that**
c) thereafter, but still before the start of the journey, internal parameters for the driving and braking behaviour of the leading first vehicle (2) are set during the journey dependent on the participant data of each participant (4, 6, 8, 10, 12) in the vehicle train (1),
d) the driving and braking behaviour of the leading first vehicle (2) then being determined during the journey of the vehicle train (1) dependent on the internal parameters.

2. A method according to claim 1, **characterised in that** at least one portion of the participant data is absolute participant data and/or at least one portion of the participant data is relative participant data that is determined dependent on a road or route to be travelled by the vehicle train (1) that is known prior to the start of the journey.

3. A method according to claim 2, **characterised in that** the relative participant data is generated dependent on driving conditions prevailing along the road or route to be travelled by the vehicle train (1) and known before the start of the journey.

4. A method according to claim 3, **characterised in that** the driving conditions involve at least the following: a friction coefficient and/or an incline and/or a decline and/or a curve in the road or route travelled or to be travelled.

5. A method according to any one of claims 2 to 4, **characterised in that** the absolute participant data is set in advance.

6. A method according to claim 5, **characterised in that** the absolute participant data is generated in relation to pre-set or predetermined driving conditions.

7. A method according to any one of the previous claims, **characterised in that** the participant data characterising the driving and braking behaviour of the participant (4, 6, 8, 10, 12) in question contains at least the following data relating to the participant (4, 6, 8, 10, 12) in question:
a) the acceleration behaviour of the participant (4, 6, 8, 10, 12) in question, in particular the engine output, the engine torque characteristic curve, the transmission ratio of the power train at a given moment in time, the maximum possible acceleration and/or the driving forces, and/or
b) the deceleration behaviour of the behaviour of the participant (4, 6, 8, 10, 12) in question, in particular the maximum possible deceleration of the vehicle, the tire slip, the brake characteristics, the longitudinal and transverse tire stiffness, and/or
c) the tip-over limit and/or the roll-over limit of the participant (4, 6, 8, 10, 12) in question, in particular the cornering limit speed, the load, the load distribution and/or the centre of gravity, and/or
d) data on the steering system of the participant (4, 6, 8, 10, 12) in question, in particular the position of wheels of steering axles, the steering angle of wheels of steering axles and/or the steering torque applied,
e) the maximum speed of the participant (4, 6, 8, 10, 12) in question.

8. A method according to any one of the previous claims, **characterised in that** the self-determination of the participant data by a participant (4, 6, 8, 10, 12) is carried out by means of sensors and/or electronic evaluation devices arranged on or in the participant (4, 6, 8, 10, 12) in question.

9. A method according to any one of the previous claims, **characterised in that** before the start of the journey of the vehicle train (1) direct or indirect vehicle-to-vehicle communication (14) takes place between the at least one second vehicle (4, 6, 8, 10, 12) and the leading first vehicle (2) and/or direct or indirect vehicle-to-X communication (16) takes place between the leading first vehicle (2) and an external infrastructure (X).

10. A method according to claim 9, **characterised in that** the first participant data characterising the driving and braking behaviour of the leading first vehicle (2) and/or the second participant data characterising the driving and braking behaviour of the at least one second vehicle (4a, 4b, 4c, 6, 8) is determined by the vehicle (4, 6, 8, 10, 12) in question itself.

11. A method according to claim 10, **characterised in that** the second participant data determined by the at least one second vehicle (4, 6, 8, 10, 12) itself is transmitted to the leading first vehicle (2) by means of the vehicle-to-vehicle communication (14).

12. A method according to claim 11, **characterised in that** the first participant data determined by the leading first vehicle (2) itself and the second participant data determined by the at least one second vehicle (4, 6, 8, 10, 12) itself is sent to the external infrastructure (X) or requested from the external infrastructure (X) by the leading first vehicle (2) by means of the vehicle-to-vehicle communication (14).

13. A method according to claim 10, **characterised in that** the leading first vehicle (2) requests or receives from the external infrastructure (X) by means of the vehicle-to-X communication (16) first participant data and/or second participant data that the infrastructure (X) has previously received by means of the vehicle-to-X communication (16) from the leading first vehicle (2) and/or from the at least one second vehicle (4, 6, 8, 10, 12).

14. A method according to claim 12, **characterised in that** the external infrastructure (X) sets the external parameters on the basis of the first participant data and on the basis of the second participant data.

15. A method according to claim 11 or 13, **characterised in that** the leading first vehicle (2) sets the internal parameters on the basis of the first participant data and on the basis of the second participant data.

## Revendications

1. Procédé de commande ou de régulation du comportement de roulement et de freinage d'un premier véhicule (2) de tête d'un convoi (1) de véhicules attelés de manière lâche ou à atteler de manière lâche, composé du premier véhicule (2) automobile de tête et au moins d'un deuxième véhicule (4, 6, 8, 10, 12) automobile pendant un trajet du convoi (1) de véhicule, dans lequel
a) le premier véhicule (2) automobile conduisant le convoi (1) de véhicules et le au moins un deuxième véhicule (4, 6, 8, 10, 12) automobile sont chacun des participants du convoi (1) de véhicules, dans lequel
b) dès avant le début du trajet du convoi (1) de véhicules, il est déterminé de soi-même pour chaque participant (2, 4, 6, 8, 10, 12) du convoi (1) de véhicules, des données de participant caractérisant un comportement de roulement et de freinage du participant (2, 4, 6, 8, 10, 12) concerné existant à un instant précédent par rapport au début du trajet et les données de participant sont transmises au premier véhicule (2) automobile de tête par au moins un participant (4, 6, 8, 10, 12) se distinguant du premier véhicule (2) automobile de tête, **caractérisé en ce que**
c) ensuite, mais encore avant le début du trajet, il est fixé par le premier véhicule (2) automobile de tête du convoi (1) de véhicules des prescriptions internes pour le comportement de roulement et de freinage du premier véhicule (2) de tête pendant le trajet, en fonction des données de participant de chaque participant (4, 6, 8, 10, 12) du convoi (1) de véhicules et dans lequel ensuite
d) pendant le trajet du convoi (1) de véhicules, le comportement de roulement et de freinage du premier véhicule (2) de tête est déterminé en fonction des prescriptions internes.

2. Procédé suivant la revendication 1, **caractérisé en ce qu'**au moins une partie des données de participant sont des données absolues de participant et/ou une partie des données de participant sont des données relatives de participant, qui sont déterminées en fonction d'une voie de circulation à emprunter par le convoi (1) de véhicules et connues dès avant le début du trajet.

3. Procédé suivant la revendication 2, **caractérisé en ce que** l'on forme les données relatives de participant en fonction des conditions de circulation, qui règnent le long de la voie de circulation ou de la section de circulation à emprunter et qui sont connues avant le début du trajet.

4. Procédé suivant la revendication 3, **caractérisé en ce que** les conditions de circulation comportent au moins les suivantes : un coefficient de frottement et/ou une pente et/ou une descente et/ou un tournant de la voie de circulation ou de la section de la circulation empruntée ou à emprunter.

5. Procédé suivant la revendication 2 à 4, **caractérisé en ce que** l'on prescrit de manière fixe les données absolues de participant.

6. Procédé suivant la revendication 5, **caractérisé en ce que** l'on forme les données absolues des participants en les rapportant à des conditions de circulation données à l'avance ou déterminées à l'avance.

7. Procédé suivant l'une des revendications précédentes, **caractérisé en ce que** les données de participant, caractérisant le comportement de roulement ou de freinage du participant (4, 6, 8, 10, 12) concerné, comportent au moins les suivantes du participant (4, 6, 8, 10, 12) concerné :
a) le comportement en accélération du participant (4, 6, 8, 10, 12) concerné, notamment la puissance du moteur, la courbe caractéristique de couple moteur, le rapport de démultiplication existant précisément de la chaîne cinématique, l'accélération possible au maximum et/ou les forces d'entraînement et/ou
b) le comportement en décélération du participant (4, 6, 8, 10, 12) concerné, notamment la décélération possible au maximum du véhicule, le glissement des pneumatiques, les valeurs caractéristiques de freinage, la rigidité longitudinale et transversale des pneumatiques et/ou
c) la limite de renversement et/ou la limite de capotage du participant (4, 6, 8, 10, 12) concerné, notamment la vitesse limite en courbe, la charge, la répartition de la charge et/ou le niveau du centre de gravité et/ou
d) des données sur le système de direction du participant (4, 6, 8, 10, 12) concerné, notamment la position de roue d'essieu directeur, l'angle de braquage des roues d'essieux directeurs et/ou le couple de direction appliqué et/ou
e) la vitesse la plus grande du participant (4, 6, 8, 10, 12) concerné.

8. Procédé suivant l'une des revendications précédentes, caractérisé en ce la détermination de soi-même des données de participant par un participant (2, 4, 6, 8, 10, 12) s'effectue au moyen de capteurs et/ou de dispositifs électroniques d'exploitation montés sur ou dans le participant (2, 4, 6, 8, 10, 12) concerné.

9. Procédé suivant l'une des revendications précédentes, **caractérisé en ce qu'**avant le début de l'itinéraire du convoi
(1) de véhicule, on effectue une communication (14) de véhicule à véhicule directe ou indirecte, entre le au moins un deuxième véhicule (2, 4, 6, 8, 10, 12) automobile et le premier véhicule
(2) automobile de tête et/ou une communication (16) de véhicule à X directe ou indirecte entre le premier véhicule (2) automobile de tête et une infrastructure (X) extérieure.

10. Procédé suivant la revendication 9, **caractérisé en ce que** des premières données de participant, caractérisant le comportement de roulement et de freinage du premier véhicule (2) automobile de tête et/ou des deuxièmes données de participant, caractérisant le comportement et de freinage du au moins un deuxième véhicule (4a, 4b, 4c, 6, 8) automobile, sont déterminées de soi-même par le véhicule (2, 4, 6, 8, 10, 12) automobile respectif.

11. Procédé suivant la revendication 10, **caractérisé en ce qu'**au moyen de la communication (14) de véhicule à véhicule, les deuxièmes données de participant, déterminées de soi-même par le au moins un deuxième véhicule (4, 6, 8, 10, 12) automobile, sont transmises au premier véhicule (2) automobile de tête.

12. Procédé suivant la revendication 11, **caractérisé en ce qu'**au moyen de la communication (16) de véhicule à X des premières données de participant, déterminées de soi-même par le premier véhicule (2) automobile de tête, et des deuxièmes données de participant déterminées de soi-même par le au moins un deuxième véhicule (4, 6, 8, 10, 12) automobile, sont envoyées par le premier véhicule (2) automobile de tête à l'infrastructure (X) extérieure ou sont demandées par l'infrastructure (X) extérieure.

13. Procédé suivant la revendication 10, **caractérisé en ce que** le premier véhicule (2) automobile de tête demande ou reçoit au moyen de la communication (16) de véhicule à (X) des premières données de participant et/ou des deuxièmes données de participant de l'infrastructure (X) extérieure, que l'infrastructure (X) a obtenues d'abord du premier véhicule (2) automobile de tête et/ou du au moins un deuxième participant (4, 6, 8, 10, 12) au moyen de la communication (16) de véhicule à X.

14. Procédé suivant la revendication 12, **caractérisé en ce que** l'infrastructure (X) extérieure fixe les prescriptions extérieures sur la base des premières données de participant et sur la base des deuxièmes données de participant.

15. Procédé suivant la revendication 11 ou 13, **caractérisé en ce que** le premier véhicule (2) automobile de tête fixe les prescriptions internes sur la base des premières données de participant et sur la base des deuxièmes données de participant.
